# EUROPÄISCHE PATENTANMELDUNG

(11) **EP 2 778 520 A2**
(43) Veröffentlichungstag der Anmeldung: **17.09.2014**
(21) Anmeldenummer: 13004683.2
(22) Anmeldetag: 26.09.2013
(51) Int. Cl.: F23C 5/00, F22B 37/02, F22B 13/00, B60R 5/04, B60R 7/02

(54) **Verfahren und Vorrichtung zum Betrieb einer kohlegefeuerten Wärmeanlage**

(30) Priorität: 02.10.2012 DE 102012019285
(71) Anmelder: Bude, Friedrich, 03050 Cottbus (DE)
(72) Erfinder: Bude, Friedrich, 03050 Cottbus (DE)

(57) **Zusammenfassung**

Die Erfindung betrifft ein Verfahren und eine Vorrichtung zum Betrieb einer Wärmeanlage, insbesondere kohlegefeuerten Dampferzeugers, für eine An- und Abfahrsowie Teillastfahrweise.

Aufgabe der Erfindung ist es, ein Verfahren und eine Vorrichtung zu schaffen, durch welche der Anfahr/Abfahr- und Teillastbetrieb einer Wärmeanlage, insbesondere eines Dampferzeugers, ohne oder nur mit wenigen zusätzlichen Öffnungen in den Brennkammerwänden wesentlich stabilisiert und die zulässige technische Mindestlast minimiert wird.

Dies wird erfindungsgemäß dadurch erreicht, dass zur Stabilisierung der Fahrweisen weit reichende Strahlen eines zündfähigen Brennstoffes, insbesondere Öl; Gas und/oder Trockenfeinkohle, steuerbar in einen wählbaren Bereich der Brennkammer mit hoher Geschwindigkeit in der Anfangsphase ungezündet eingeschossen, an instabilen Flammenbereichen und /oder Temperatursenken und/oder Nachverbrennungszonen platziert sowie dort zerstäubt und verbrannt werden.

Zur Realisierung des Verfahrens ist erfindungsgemäß eine Vorrichtung angegeben (Fig.1)

## Beschreibung

Die Erfindung betrifft ein Verfahren und eine Vorrichtung zum Betrieb einer Wärmeanlage, insbesondere kohlegefeuerten Dampferzeugers, für eine An- und Abfahr- sowie Teillastfahrweise.

Es ist bekannt, dass das Energieversorgungsnetz, insbesondere das Verbundnetz Deutschland, durch Leistungssteuerung der Grundlastkraftwerke mit Kohle- und Nuklearenergie stabilisiert wird.

Die Netzfrequenz im kontinentaleuropäischen Verbundsystem ist überall gleich/synchron und wird zwischen 49,980 und 50,020 Hz gehalten. Das sichert die Primärregelleistung der in der UCTE (Union der Übertragungsnetzbetreiber) vertretenen Übertragungsnetzbetreiber mit Hilfe der Turbinendrehzahlregelungen der Grundlast-Kraftwerke ab.

Zukünftig sollen die Erneuerbaren Energien Priorität bei der Netzeinspeisung erhalten. Somit müssen in wind- und sonnenstarken Zeiten die Grundlastkraftwerke nicht nur auf Teillast gefahren, auch öfters abgeschaltet werden, damit durch Überkapazitäten keine Netzinstabilitäten eintreten. Fällt Wind oder Sonne dann kurzfristig aus, müssen Grundlast-Kraftwerke schnell hoch- oder angefahren werden. Im Jahr 2020 werden zeitweise Erzeugerleistungen aus Wind- und Sonne-Energie in Deutschland bis zu 80 GW erwartet, obwohl der Gesamt-Strombedarf auf etwa 70 GW prognostiziert ist. Selbst bei Stilllegung aller Nuklearerzeuger würde der Betrieb der Grundlast-Kraftwerke auf heutiger technischer Mindestlast noch zu Leistungsüberschuss und damit unzulässigen Frequenzüberschreitungen im Netz führen. Die Energieabfuhr kann heute wegen fehlender Netzkapazität von Nord nach Süd und später auch nicht vollständig in externe Netze des Auslandes gespeist werden oder wird nur mit Dumpingpreisen abgenommen. Es fehlen ausreichende Speichersysteme, wie Pumpspeicherwerke, so dass die Verringerung des technischen Mindestlast-Betriebes oder das mehrfache tägliche An- und Abfahren der konventionellen Anlagen notwendig wird. Die Regelfähigkeit des Verbundnetzes wird extrem verschlechtert, die Lebensdauer der für diese verstärkte Wechsellast bisher nicht ausgelegten Bauteile der Dampferzeuger erheblich verkürzt.

Bei mit Kohle gefeuerten Dampferzeugern wird das Anfahren aus dem kalten Zustand mit Öl- oder Gasbrennern, welche benachbart zu den Kohlestaubbrennern angeordnet sind, durchgeführt. Erst, wenn eine ausreichende Gas- oder Ölflammenhitze vorhanden ist, können Kohlenstaubbrenner zugeschaltet werden. Deren Kohlenstaub-Luftgemisch erfordert zur Zündung eine ausreichend heißen stabilen Öl- oder Gasflammenkern. Gleiches erfolgt bei niedriger Teillast. Auch dann stabilisieren in Betrieb befindliche Zündöl- oder Gasbrenner die Kohlenstaubflammen.

Bisher wird die minimale technische Mindestlast von großen Braunkohledampferzeugern ohne Einsatz von Ölbrennern je nach Kohlequalität mit ca. 70 bis 50 % der Volllast definiert. Die Nachteile bei Teillast sind:
- Zunahme des Inertgas/Rauchgasanteils pro verbrannter Kohlemenge mit dem entsprechender verringerter Sauerstoffkonzentration, welche durch erhöhten relativen Luftüberschuss ausgeglichen werden muss,
- fehlende Ausfüllung des Brennkammerquerschnittes mit Flammenvolumen durch das Abschalten von Kohlemühlen,
- Strähnenbildung der Flammen mit relativen verbrennungsarmen Räumen, Flammen-Löchern/Schieflast mit Temperatursenken in der Brennkammer, welche sich bis in die Überhitzerschotten fortpflanzen und ungleichmäßige Wärmeübertragung mit erhöhtem Regelbedarf nachgeschalteter Heizflächen erfordern,
- Temperaturabsenkung der Flammen durch geringere Verbrennungsenergiefreisetzung mit Verschlechterung des Ausbrandverhaltens,
- seitliche Verlagerung des Brennkerns und Verlagerung in Strömungsrichtung mit Verschiebung der Wärmeübertragung Richtung Dampferzeuger-ende.

Nur teilweise kann diesen Nachteilen mit erhöhtem Öleinsatz durch Zuschalten von Zünd- und Stützölbrennern entgegengewirkt werden.

Diese Verfahrensweise ist begrenzt, weil
- der erhöhte Öleinsatz zu erheblichen wirtschaftlichen Nachteilen führt,
- die Ölbrennerflamme unterhalb oder neben den Hauptbrennern ausgebildet werden, damit die oben genannten verlängerten Ausbrandwege bis Brennkammerende nicht erreicht werden,
- bei Ölbrennerbetrieb benachbart zu den in Betrieb befindlichen Kohlenstaubbrennern die Nachteile der Flammenkonzentration mit Flammenschlauchbildung noch verstärkt werden.

Neben den in Dampferzeugern für die Brennstoffzufuhr angeordneten großen Brenneröffnungen für Kohle, Gas oder Öl, den Rauchgasrücksaugeöffnungen heißer Gase zur Kohletrocknung in den Mühlen und den im oberen Brennkammerbereich befindlichen Drittluft(Ausbrandluft-)-Einblasungen gibt es nur wenige weitere Öffnungen zur Beobachtung und Anordnung von Zusatzeinrichtungen in den Brennkammerwänden. Die Bennkammerwände sollen gasdicht sein und sind vollständig mit Wärmeübertragungsrohren für die Wasserverdampfung ausgekleidet. Deshalb bringt jede zusätzliche Öff nung bautechnische und technologische Nachteile.

Aufgabe der Erfindung ist es, ein Verfahren und eine Vorrichtung zu schaffen, durch welche der Anfahr/Abfahr- und Teillastbetrieb einer Wärmeanlage, insbesondere eines Dampferzeugers, ohne oder nur mit wenigen zusätzlichen Öffnungen in den Brennkammerwänden wesentlich stabilisiert und die zulässige technische Mindestlast minimiert wird.

Dies wird erfindungsgemäß dadurch erreicht, dass zur Stabilisierung der Fahrweisen weit reichende Strahlen eines zündfähigen Brennstoffes, insbesondere Öl; Gas und/oder Trockenfeinkohle, steuerbar in einen wählbaren Bereich der Brennkammer mit hoher Geschwindigkeit in der Anfangsphase ungezündet eingeschossen, an instabilen Flammenbereichen und /oder Temperatursenken und/oder Nachverbrennungszonen platziert sowie dort zerstäubt und verbrannt werden.

Zur Realisierung des Verfahrens sind erfindungsgemäß in einer Öffnung der Wand der Brennkammer eine oder mehrere mit einem zündfähigern Brennstoff beaufschlagbare steuerbare und bewegliche Brennstoff-Schießein-richtungen angeordnet.

Die Erfindung mit ihrem technischen Umfeld wird anhand von Figuren beschrieben. Diese zeigen:
- Fig.1:: Die Brennkammer des Dampferzeugers mit den erforderlichen Öffnungen in den Rohrwänden für dessen Betrieb
- Fig.2:: Der Wasserlanzenbläser mittig mit Brennstoff-Schießeinrichtung
- Fig.3:: Den Mündungsbereich des Wasserlanzenbläsers und der Brennstoff-Schießeinrichtung in dessen Lanzenmitte
- Fig.4:: Den Wasserlanzenbläser mit benachbart zur Lanze angeordneten Brennstoff-Schießeinrichtung
- Fig.5:: Den Mündungsbereich des Wasserlanzenbläsers mit benachbart zur Lanze angeordneten Brennstoff-Schießeinrichtung
- Fig.6:: Die Führungstrommel mit drei integrierten Vorrichtungen
- Fig.7:: Die Brennkammer des Dampferzeugers mit den erforderlichen Öffnungen in den Rohrwänden für dessen Betrieb und die Einordnung von Brennstoff-Schießeinrichtungen in/an ABL-Ausbrandluftöffnungen
- Fig.7.1:: Die Einzelheit Y mit dem Mündungsbereich von Ausbrandluft und Brennstoff-Schießeinrichtung
- Fig.8.1:: Den Mantelrohr-Anschluss der Brennstoff-Schießeinrichtung an der Membran-Rohrwand
- Fig.8.2:: Den Mündungsbereich der Brennstoff-Schießeinrichtung mit der Mundstücköffnung in der Membran-Rohrwand

Diese Fig. stellen nur bevorzugte Ausführungen dar. Die Erfindung ist nicht auf diese Ausführungen begrenzt.

Der Großdampferzeuger, welcher mit Braunkohle befeuert wird, erzeugt Dampf, welcher in Turbinen zur Stromerzeugung genutzt wird.

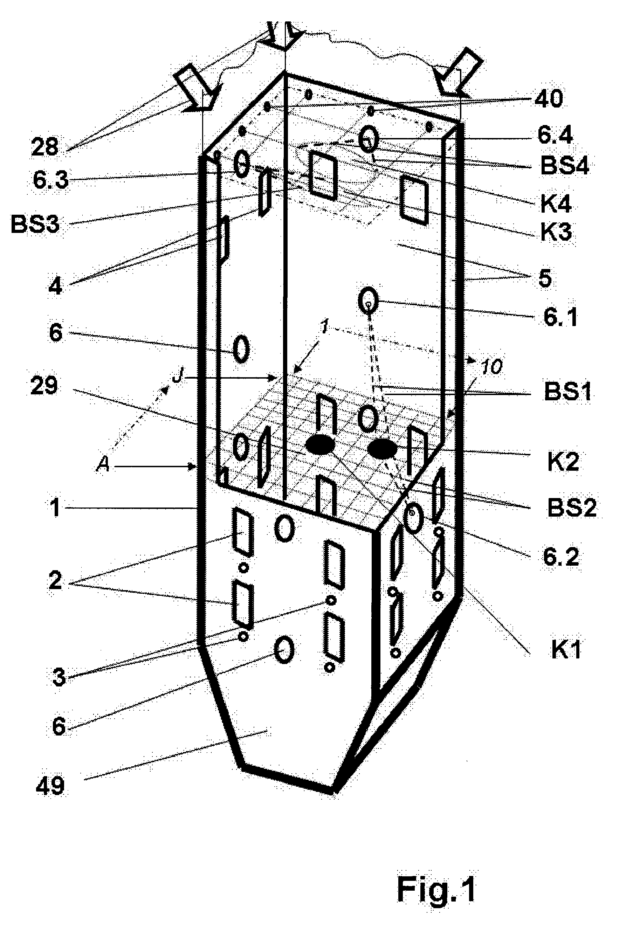

Dessen Brennkammer 1 (Fig. 1) mit einer Höhe von 66 m und einem Querschnitt von 20 x 20 m ist im unteren Teil oberhalb des Brennkammer-Trichters 49 an jeder Brennkammer-Seite mit vier Kohlenstaubbrennern 2 und vier Anfahr/Stützölbrennern 3 ausgerüstet. Im oberen Teil der Brennkammer 1 sind an jeder Brennkammer-Seite zwei Rauchgasrücksaugeöffnungen 4 angeordnet. Oberhalb dieser ist die Ausbrandluft-Ebene mit je drei Ausbrandluft-Bläsern 40 je Brennkammer-Seite angeordnet. In den dicht geschweißten Rohrwänden 5 der Brennkammer 1 befinden sich über die Höhe verteilt zusätzlich noch Öffnungen 6; 6.1; 6.2; 6.3; 6.4 für Wasserlanzenbläser 7, je vier pro Brennkammer-Seite. In Höhe des Brennkammer-Endes unterhalb der Schottenwände befindet sich in jeder Brennkammer-Ecke eine wärmegeschützte Feuerraumsonde 28 mit Videokamera (nur als Blickrichtungs-Pfeil 28 dargestellt).

Zur Erklärung der Wirkungsweise der Erfindung ist oberhalb der Kohlenstaubbrenner 2 ein fiktives Rasternetz 29 mit den Koordinaten A-J und 1-10 punktiert eingezeichnet. In den Koordinaten E-5, F-8 sind die Flammenkerne K1, K2 im Rasterfeld 29 dargestellt.

In den Öffnungen 6.2; 6.2; 6.3; 6.4 sind mit zündstabilen Brennstoff, z.B. Öl, Gas oder Trockenfeinkohle, beaufschlagbare Brennstoff-Schießeinrichtungen angeordnet (nicht dargestellt).

An zwei Öffnungen 6.1; 6.2 sind Brennstoff-Schießeinrichtungen in Betrieb und erzeugen weit reichende Brennstoffstrahlen BS1; BS2.

Ebenfalls fiktiv ist die Ausbrandluft-Ebene strich-punktiert oberhalb der Rauchgasrücksaugeöffnung 4 dargestellt. An der Öffnung 6.3 erzeugt eine nicht bewegte mit Öl beaufschlagte Brennstoffschieß-Einrichtung den Brennstoffstrahl BS3, dessen Flammenkonzentration als fiktiver punktierter Flächendurchtritt K3 in der Ausbrandluft-Ebene dargestellt ist.

An der Öffnung 6.4 erzeugt eine in X-Richtung sich hin und her schwenkende Brennstoffschieß-Einrichtung den Brennstoffstrahl BS4, dessen Flammenkonzentration durch das eingeschossene Öl den fiktiven punktierten Flächendurchtritt K4 in der Ausbrandluft-Ebene bestreicht.

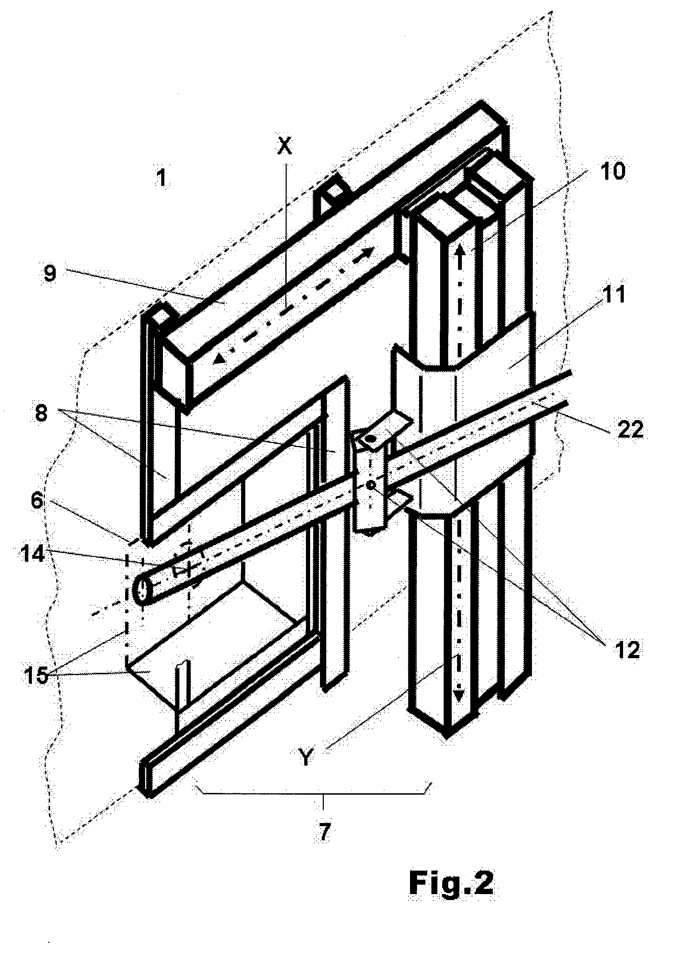

An den Öffnungen 6 (Fig.2), als Rechtecke symbolisch dargestellt, ist eine Mauerwerksaussparung für die Abdeckhaube 15 mit einem äußerem Rahmen 8 für die Befestigung eines Wasserlanzenbläser 7 mit gesteuerten Führungs- und Lenkeinrichtungen angebracht. Diese bestehen aus der waagerechten Führungsschiene 9, der senkrechten Führungsschiene 10 mit dem Führungsarm 11, welcher über die Schwenkgabel 12 Brennstoff-Schießeinrichtung 22 führt. Der Kopf der Brennstoff-Schießlanze 22 wird wahlweise in dem Kardan- oder Kugelgelenk 14 geführt, welches in der Abdeckhaube 15 (beides im Detail nicht näher dargestellt) für die Abdichtung in der Öffnung 6 befestigt ist. Über nicht dargestellte Antriebs- und Steuereinrichtungen sind Führungsschiene 10 in X-Richtung auf der Führungsschiene 9 und Führungsarm 11 in Y-Richtung auf der Führungsschiene 10 bewegbar.

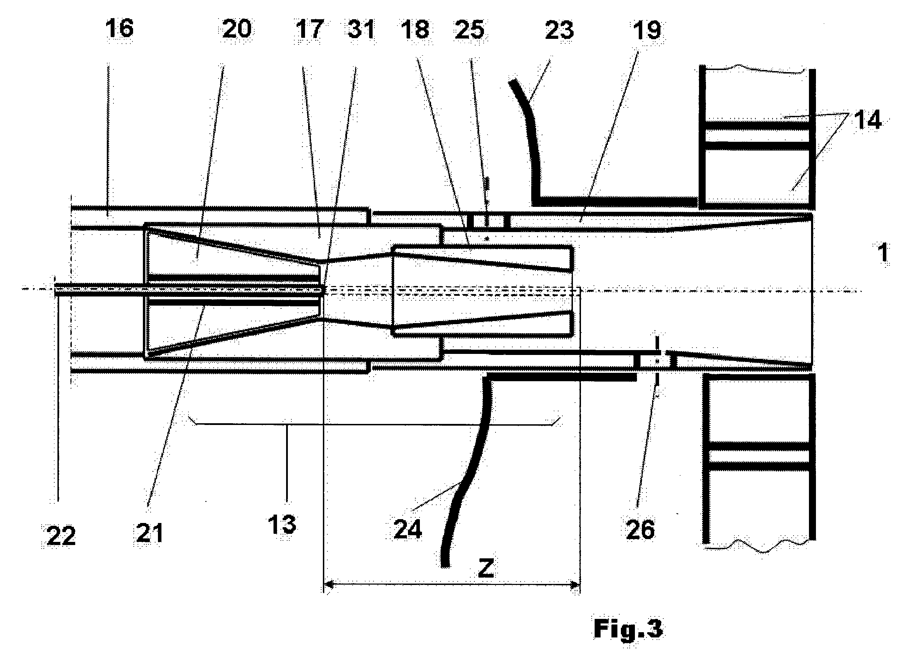

Die Wasserlanze 13 des Wasserlanzenbläsers 7 (Fig.3) besteht aus dem Blasrohr 16, welches am hinteren Teil einen nicht dargestellten Wasserschlauchanschluss aufweist. In das vordere Ende des Blasrohres 16 ist die Düsenhalterung 17 vorgesehen, in welcher die Blasdüse 18 befestigt ist. Die Verschraubung der Düsenhalterung 17 mit dem Vorsatzrohr 19 sichert dort die Befestigung der Wasserlanze 13 im Kardangelenk 14 mit Blasstrahlausgang zur Brennkammer 1. Im hinteren Teil der Düsenhalterung 17 ist zur Entdrallung des Wasserstrahles das Führungskreuz 20 aus Blechen eingepasst.

Im Zentrum des Führungskreuzes 20 ist mittig die ölbeaufschlagte Brennstoff-Schießlanze 22 angeordnet, welche durch die Lanzen-Führung 21 gleitend gelagert ist. Diese Brennstoff-Schießlanze 22 ist um den Öllanzenweg Z /mm/ nach vorn in Richtung Brennkammer verschiebbar. Im hinteren Teil (hier nicht dargestellt) ist diese über weitere Führungen mittig der Wasserlanze 13 bis zu deren Eingang geführt und außerhalb an einen gesteuerten beweglichen Ölzulauf mit Vorwärmung (nicht dargestellt) angeschlossen.

Mittels eines feuerfesten Tuches als Abdeckung für das Kardangelenk 14 ist wahlweise für Unterdruck 23 mit Kühlluftöffnung 25 oder Überdruck 24 mit Kühlluftöffnungen 26 die Abdichtung des steuerbaren Blaskopfes zur Brennkammer 1 gesichert. Wasserlanze 13 mit Brennstoff-Schießlanze 22 und Führung 21 bilden die Wasser-Brennstoffschieß-Lanzen.

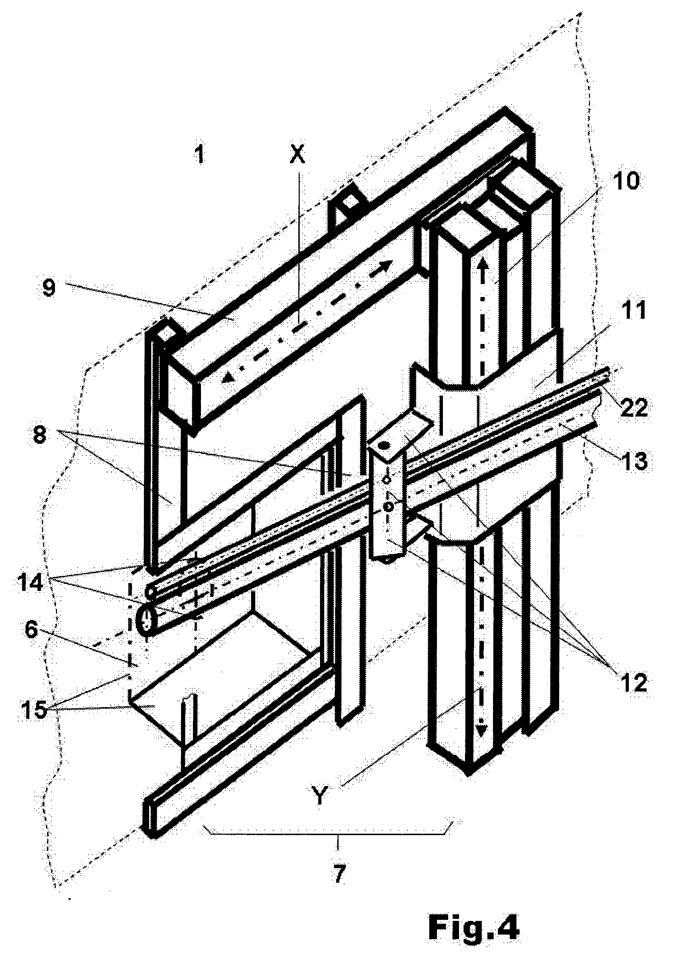

Der Wasserlanzenbläser 7 (Fig.4) weist benachbart zur Wasserlanze 13 die Brennstoff-Schießlanze 22 auf. Eine verlängerte Schwenkgabel 12 und das Kardangelenkes 14 führen parallel beide Einrichtungen 13 und 22.

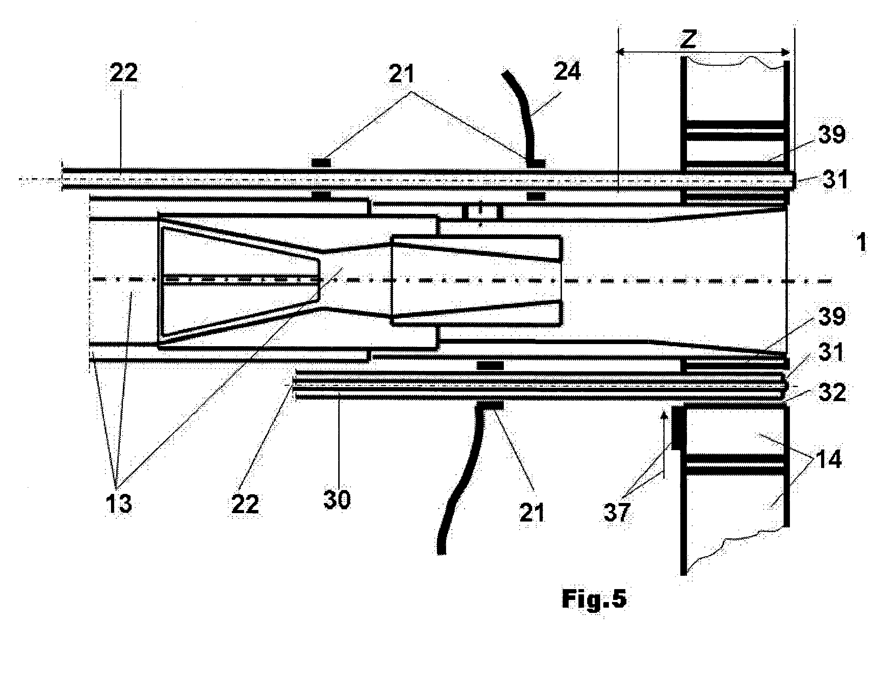

Die Wasserlanze 13 (Fig. 5) ist mit einer oder mehreren Brennstoff-Schießlanzen 22 mit Führungen 21 am äußeren Umfang der Wasserlanze 13 vorgesehen. Die Brennstoff-Schießlanzen 22 münden zur Brennkammer 1 in einer Kardanring-Führung 39 des inneren Kardanringes.

Im oberen Halbschnitt (Fig.5) ist die Lanzenmündung 31.1 der Brennstoff-Schießlanze 22 (mit einem ca. 3 mm Außendurchmesser) in der Kardanring-Führung 39 ein- und rückfahrbar.

Im unteren Halbschnitt (Fig.5) ist die Brennstoff-Schießlanze 22 mit einem Mantelrohr 30 umhüllt. Das Mantelrohr 30 ist mit einem Treibmedium-Anschluss (nicht dargestellt) versehen. Das Mantelrohr 30 ist mit der Brennstoff-Schießlanze 22 am Lanzenausgang 31 wahlweise als einfacher Ringspalt oder Ejektor ausgebildet oder weist mittige den Austritt für das Öl als Injektor für Mantelluft oder Dampf oder Gas am Ringspalt des Lanzenausgangs 31 auf. Wahlweise ist zusätzlich der Mantelluftspalt 32 bei Überdruck in der Kardangelenk-Abdeckung 24 vorgesehen. Der Schieber 37 (hier um 90° gedreht dargestellt) dient als Mediumsperre bei zurückgezogener Brennstoffschieß-lanze 22.

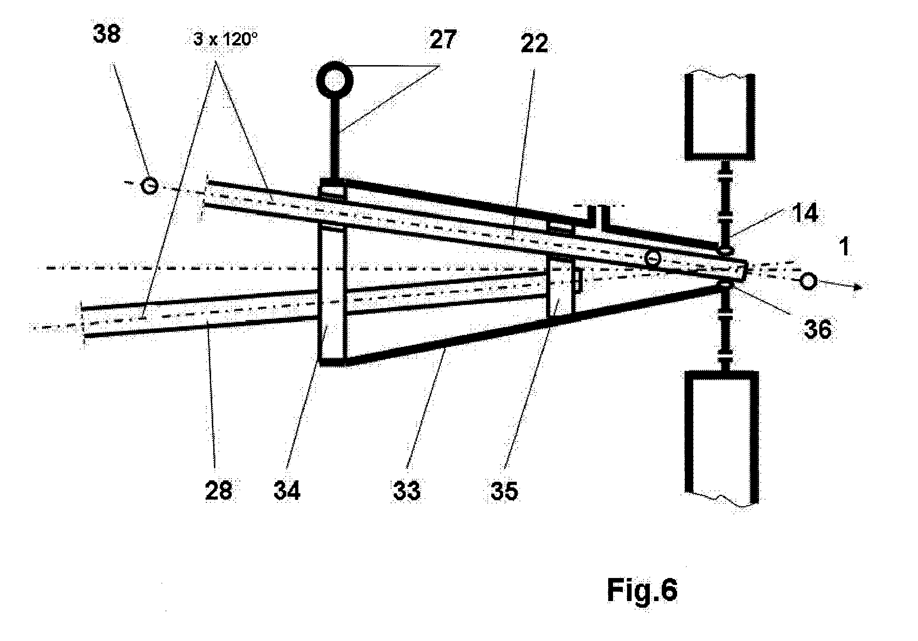

In einem Trommelgehäuse 33 (Fig.6) mit der hinteren und vorderen Führungsscheibe 34; 35, welches kegelförmig an das Kardan-Mundstück 36 des Kardan-Gelenkes 14 anschließt, ist die Brennstoff-Schießlanze 22, die Lanze 50 für Feuerraumsonde oder Sensorik 28 und (nicht dargestellt) die Wasserlanze 13, je um 120° am Umfang versetzt derart angeordnet, dass diese verschiebbar in den äußeren Führungsscheiben 34;35 geführt und wahlweise in das Mundstück 36 einfahrbar sind. Das Trommelgehäuse 33 besitzt die Führungsstange 27, welche über die (nicht dargestellte) Schwenkgabel 12 die Lanzen 12; 22; 50 in X-Y-Richtung führt.

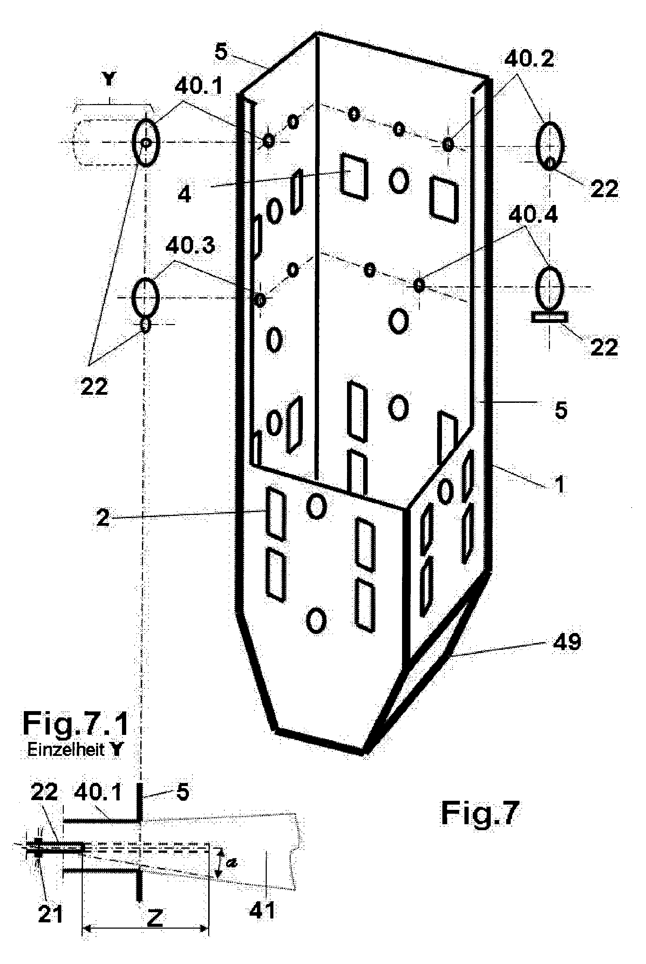

Die Brennkammer 1 (Fig.7) mit den Anschlüssen und Öffnungen (Fig. 1) weist neben der Ausbrandluft-Bläser-Ebene mit den Ausbrandluft-Bläsern 40.1; 40.2 oberhalb der Rauchgasrücksaugöffnungen 4 eine weitere Ausbrandluft-Bläser--Ebene mit je zwei Ausbrandluft-Bläsern 40.3; 40.4 oberhalb der Kohlenstaubbrennern 2 in den Brennkammerwänden 5 auf.

Die Ausbrandluft-Bläser sind schematisch am Figuren-Rand nochmals vergrößert dargestellt. Dort sind diese mit Brennstoff-Schießlanzen 22 ausgerüstet, wobei diese in den Ausbrandluft-Bläsern 40.1 mittig, in den Ausbrandluft-Bläsern 40.2 am unteren Innendurchmesser, an den Ausbrandluft-Bläsern 40.3; 40.4 unterhalb deren Außendurchmesser angeordnet sind. Die Brennstoff-Schießlanze 22 vom Ausbrandluft-Bläser 40.4 ist an der Mündung als Schlitzdüse ausgeführt oder in mehrere kleinere Öffnungen aufgeteilt.

Die Einzelheit Y des Ausbrandluft-Bläsers 40.1 ist mit dem Heißluft-Strahl 41 dargestellt (Fig.7.1). Die Brennstoffschieß-Lanze 22 ist mittig mit einer schwenk- oder drehbaren Lanzenführung 21 ausgerüstet. Wahlweise ist die Lanzenführung 21 um den Winkel a schwenkbar und die Brennstoffschieß-Lanze 22 um den Betrag Z verschiebbar.

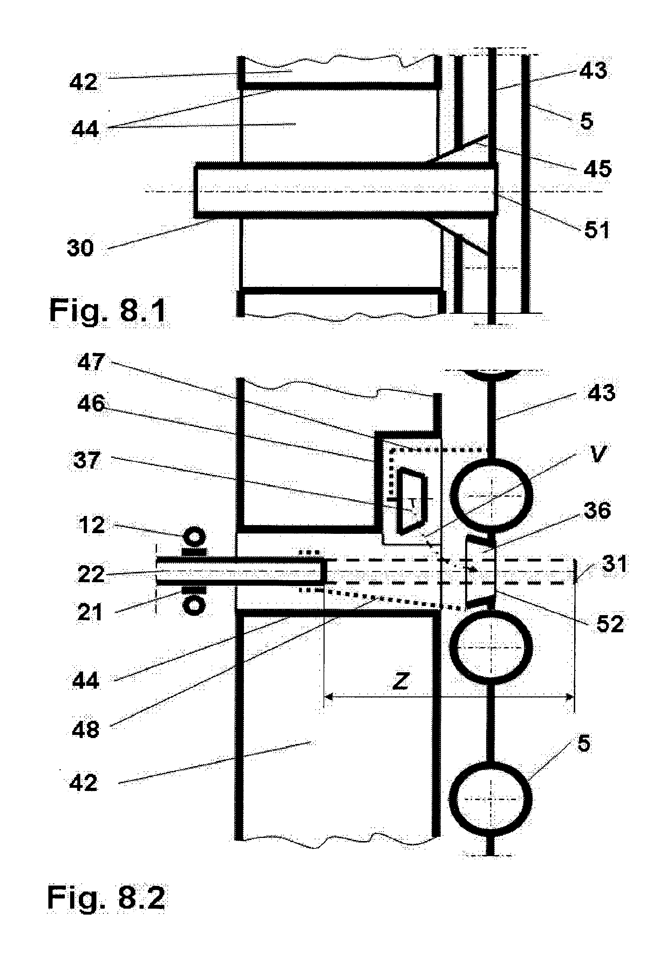

Bei dem Dampferzeuger (Fig. 8) ist die Membran-Rohrwand 5 mit Stegen 43 und senkrechtem Rohrsystem am Mauerwerk mit Gerüst 42 befestigt (Fig.8.1-Seitenansicht, Fig. 8.2 Draufsicht).

Im Steg 43 (Fig.8.1) ist die Wandöffnung 51 angebracht, welche mit dem Mantelrohr 30 verschweißt und mittels Stabilisatoren 45 an der Membran-Rohrwand 5 starr befestigt ist. Die Höhe der Mauerwerk-Öffnung 44 für das Mantelrohr 30 berücksichtigt die Temperatur abhängige Rohrwandbewegung gegenüber dem Mauerwerk mit Gerüst 42 und Bühnen.

Im Steg 43 (Fig. 8.2) der Membran-Rohrwand 5 ist die Wandöffnung 52 mit dem Mundstück 36 ausgerüstet. In einer benachbart angebrachten Mauerwerks-Aussparung 46 befindet sich der Verschlussstopfen 37. Mit einer hier nicht näher dargestellten Mechanik 47 wird dieser über eine Verschluss-Bewegung V das Mundstück 36 wahlweise verschließen. Die Brennstoff-Schießlanze 22 ist in der Lanzenführung 21 mit Gelenk 12 schwenkbar geführt. Der Schwenkmechanismus mit der nicht dargestellten hinteren Führung ist analog der schon beschriebenen Mechaniken ausgeführt. Beide Lagerungen sind am Mauerwerk mit Gerüst 42 oder der begehbaren Bühne in oder vor der Mauerwerks-Öffnung 44 angebracht. Die Brennstoff-Schießlanze 22 ist um den Öllanzenweg Z verschiebbar. Die Brennstoff-Schießlanze 22 bekommt wahlweise zur Arretierung beim Einschieben ihrer Lanzenmündung 31 in das Mundstück 36 eine hier nicht näher beschriebene Mündungsführung 48.

Die Wirkungsweise wird nachfolgend an ausgewählten Beispielen beschrieben.

Die Brennstoff-Schießeinrichtung schießt einen dünnen Strahl von Öl, Gas oder festem kompaktem oder staubförmigem oder ein Gemisch von Brennstoff mit hoher Geschwindigkeit in der Anfangsphase, dieser durchdringt das Flammen-Rauchgasgemisch fast unverbrannt bis zu einem wählbaren Bereich der Brennkammer 1. Wegen des geringen Strahldurchmessers verringert sich die Geschwindigkeit schnell, so dass der Strahl zerstäubt und ausbrennt. Somit wird mit der Steuerung von Menge und Geschwindigkeit entfernungsabhängig der Brennstoff an einem Ort/Bereich gezielt für die Verbrennung platziert. Die Hauptwirkung erfolgt nicht auf dem Strahlweg, sondern erst im gewählten Bereich. Dabei wird das Schießen pulsierend oder stetig stattfinden. Die Brennstoff-Schießlanze ist vorwiegend zwei- oder dreidimensional bewegbar.

Zum Anfahren des Dampferzeugers muss mittels Anfahr/Stützölbrennern 3 in der Brennkammer 1 ein heißer Flammenbereich erzeugt und stabilisiert werden. Erst danach kann Rohbraunkohle mit heißem Rauchgas, welches über die Rauchgasrücksaugöffnungen 4 von den Ventilatormühlen aus der Brennkammer 1 angesaugt wird, getrocknet, gemahlen und als Braunkohlenstaub-Rauchgasgemisch mit Heißluft über die Kohlenstaubbrenner 2 in die stabile Ölflamme eingeblasen und zur Zündung gebracht werden. Durch die Leistungssteigerung der Kohlezufuhr und dem schrittweisen Zuschalten mehrerer Mühlen mit Kohlenstaubbrennern 2 wird die Flammentemperatur gesteigert, die Kohlenstaubflamme derart stabilisiert, dass die Anfahr/Stützölbrennern 3 schrittweise außer Betrieb genommen werden können.

Der reine Kohlebetrieb von Grundlastkraftwerken ist im Volllastbereich des Dampferzeugers stabil. Die Flammenstabilität sinkt mit dem Absenken der Dampferzeuger- und Feuerungsleistung. Dies ist dadurch bedingt, dass jede Ventilatormühle nur eine begrenzte minimale Brennstoffmenge zulässt. Die angesaugte Rauchgasmenge steigt bei abnehmender Brennstoffzufuhr, so dass die Konzentration von Kohlenstaub im einzublasenden Rauchgas am Kohlenstaubbrenner-Austritt "verdünnt", damit die Stabilität der Flamme verringert wird. Somit entsteht die Notwendigkeit, Ventilatormühlen außer Betrieb zu nehmen, um die Leistung der restlichen in Betrieb befindlichen Mühlen-Kohlenstaubbrenner-Systeme mit ausreichender Kohlenstaubkonzentration stabil zu halten. Diese Mühlenabschaltung führt wiederum dazu, dass die Brennkammer im Zündbereich nur teilweise mit Flamme ausgefüllt ist, was weitere Instabilität erzeugt. Der "verdünnte" Flammenkern liegt bei z.B. nur noch 3 statt 6 in Betrieb befindlicher Mühlen nicht mehr mittig, flammenarme Räume bilden sich. Außerdem zieht die volumengeringere Flamme als Schlauch in der Brennkammer nach oben, was in den Nachschaltheizflächen zu unkontrollierbaren schaltungstechnisch nicht beherrschbaren Wärmeübertragungen führt.

Mit weiterer Teillast und der verringerten in Betrieb befindlichen Mühlenanzahl senkt sich die mittlere Flammentemperatur, was den Ausbrand verzögert. Dieser verlagert sich Richtung Brennkammer-Ende. Die Gefahr des langsamen Erlöschens der Flamme besteht. Anfahr/Stützölbrenner müssen zugeschaltet werden, wenn die elektronischen Flammenswächter dies signalisieren.

Der Dampferzeuger mit der Brennkammer 1 (Fig. 1) wird am Morgen eines Werktages mit Volllast von 100% betrieben. Durch sonniges windiges Wetter nimmt die Stromeinspeisung in das Verbundnetz durch Fotovoltaik- und Windkraftanlagen extrem zu. Die Frequenzregelung mit der Vorrangeinspeisung der erneuerbaren Anlagentechnik erfordert extreme Reduzierung der Grundlasteinspeisung der Kohlekraftwerke. Der Dampferzeuger muss entweder abgefahren werden, was beim Wiederanfahren erhebliche Nachteile bringt, oder mehrere Dampferzeuger werden auf minimale Teillast abgesenkt. Dies erfolgt feuerungsseitig wie beschrieben durch Reduzierung der Kohlezufuhr mit Absenkung der Mühlenleistung und Abschalten von Ventilatormühlen.

Bei 100%Volllast bildete sich mit sechs in Betrieb befindlichen Mühlen und zwölf Kohlenstaubbrennern 2 eine gleichmäßige Wärmeverteilung in der Brennkammer 1 mit sicherem Kohleausbrand bis Brennkammer-Ende, ein mittiger Brennkreis mit Flammenkern K1 im Feld E-6 des Rasternetzes 29, was optisch oder messtechnisch über die Auswertung der Videokamerasysteme 28 registriert wird.

Durch die erforderliche Lastabsenkung mit schrittweiser Mühlenabschaltung verlagert sich der Flammenkern bzw. das verbliebene Flammenzentrum der Ebene 29 bei diesem Beispiel in Richtung der Koordinaten G-8, was ebenfalls über die Auswertung der Videokameras registriert wird. Gleichzeitig verlagert sich der Flammenkern K2 nach oben, seine mittlere Flammentemperatur sinkt. Zur Stabilisierung des Flammensystems werden in der Regel Anfahr/Stützölbrenner 3 zugeschalten, welche einen erheblichen Ölbedarf über längere Zeitabschnitte bis zur erneuten Laststeigerung erfordern. Dieser Ölverbrauch ist extrem unökonomisch. Außerdem müssen die Anfahr/Stützölbrenner 3 im Bereich der vorhandenen Staubflammen zur Zündung gebracht werden, um den Stabilisierungseffekt zu erreichen. Damit nimmt aber dort die Flammenintensität gegenüber den gering beaufschlagten Flammenbereichen, so genannten "Flammenlöchern" bzw. Toträumen extrem zu. Im Bereich der Koordinaten G-8 wirkt dagegen ein hoher Flammenauftrieb mit sogenannter Schlauchbildung und Schieflast bis in die Nachschaltheizflächen.

Erfindungsgemäß werden die beschriebenen Nachteile durch den Einsatz von Brennstoff-Schießeinrichtungen in/an den Öffnungen 6; 6.1; 6.2; 6.3; 6.4 der Wasserlanzenbläser 7 beseitigt, wobei der zündfähige Brennstoff, hier vorgewärmtes Heizöl, in beliebige Richtungen gesteuert über Bewegungs- und/oder Schwenkwege in den Wandöffnungen separat oder/und mit vorhandenen oder neu installierten Wasserreinigungs- und/oder Überwachungseinrichtungen gekoppelt in den Feuerraum eingeschossen wird. Sie ermöglichen mit geringem zusätzlichem Einsatz von hochwertigem Brennstoff eine Stabilisierung der Kohlenstaubflammen mit gezielter Vergleichmäßigung oder/und Verlagerung der Flammen ohne oder mit verringertem Einsatz von Anfahr/Stützölbrennern 3.

Bei diesem Beispiel wird durch die Auswertung des messtechnisch über Feuerraumsonde und Videokamerasysteme 28 ermittelten sich abkühlenden Flammenkern bei K2 die Brennstoff-Schießeinrichtung im gewählten Bereich mit der Koordinate G-8 vorprogrammiert in Betrieb genommen. Die Brennstoff-Schießlanzen 22 an den Öffnungen 6.1; 6.2 fahren über ihre X-Y-Koordinaten (Fig.2) in Positionen, bei welchen nach Inbetriebnahme beider Brennstoff-Schießlanzen 22 (Fig.3) weit reichende Strahlen des zündfähigen Öles ohne internes/separates Zündverfahren als Brennstoffstrahlen BS1 und BS2 in den sich langsam abkühlenden Flammenkern K2 gezielt eingeschossen werden, welche dort zünden und sofort ausbrennen, Hitze erzeugen und die Kohleverbrennung stabilisieren.

Somit werden mittels Flammenüberwachung in Abhängigkeit von Mühlen/Brennerkombination und Dampferzeugerlast kritische/instabile ZündBrennräume/orte ermittelt, welche nach Programmierung zugeordneter Brennstoff-Schieß-Kombinationen mit Inbetriebnahme vorgegebener Brennstoff-Schießeinrichtung deren Koordinatenstellungen festlegen.

Die bei minimaler Teillast entstehenden flammenarmen Räume/Toträume oder instabilen ZündBrennräume führen in den Nachschaltheizflächen zu ungleichmäßiger Wärmeübertragung/Schieflast auf die einzelnen Dampfstränge, was durch gekreuzte Heizflächenschaltung und Einspritzsysteme zur Temperaturregulierung nur mit wirtschaftlichen und Werkstoff ermüdenden Nachteilen und nur teilweise kompensiert wird. Die weitere Minimierung der technischen Mindestlast führt zu dampfseitigen Regelgrenzen, scheitert an der fehlenden Wärmeübertragung in den Nachschaltheizflächen, weil die Strahlungswärmeübertragung in der Brennkammer relativ zu hoch ist, die zulässigen Frisch- und/oder Zwischendampftemperaturen nicht mehr erreicht werden. Tritt dieser Fall ein, werden über Brennstoff-Schießeinrichtungen, bei diesem Beispiel mehrere Brennstoff-Schießeinrichtung, in den Öffnungen 6; 6.1; 6.2; 6.3; 6.4 die mit hoher Luftleistung erzeugten Luftstrahlen der Ausbrandluft-Bläser 40 auf der fiktiven Ausbrand-Luft-Bläser-Ebene mit hochwertigem Brennstoff, hier Öl, beschießen ( Fig. 1). Dies wird über den Brennstoffstrahl BS3 mit dem Ölstrahl-Flächendurchtritt K3 auf der Ausbrandluft-Bläser-Ebene symbolisiert. Des Weiteren wird durch den sich bewegenden Brennstoffstrahl BS4, welcher über die Hin- und Her- Bewegung in X-Richtung der Brennstoff-Schießlanze 22 an der Öffnung 6.4 den relativ breitflächigen Flammenbereich K4 in Höhe der Ausbrandluft-Bläser-Ebene überstrichen. Die Platzierung der Brennstoffstrahlen ist somit richtungsfest oder bewegt oder/und pulsierend möglich.

Durch diese stabilisierenden Wirkungen für die Nachverbrennung auch abgekühlter Kohleteilchen unmittelbar vor den Schotten und Berührungsheizflächen wird bei minimaler Teillast das Verhältnis der Wärmeübertragung von Verdampfer in der Brennkammer zugunsten der Überhitzer verringert. Damit ist ein entscheidendes Hindernis der Teillastbegrenzung beseitigt. Diese Methode kann durch Steigerung der Ausbrandluft-Luftzufuhr mit der weiteren Inbetriebnahme von Brennstoff-Schießlanzen 22 gesteuert und an die Last angepasst werden.

Somit wird das Brennstoffschieß-Verfahren durch kontinuierliches und/oder diskontinuierliches Einschießen zündstabiler Brennstoffe ohne/mit variablen Schwenkbewegungen in X- und/oder Y-Richtung zur Korrektur der Wärmeübertragungsverhältnisse zwischen Verdampfung und Überhitzung verwendet.

Besonders beim An- und Abfahren des Dampferzeugers kann durch Wärmeeintrag der Brennstoff-Schießeinrichtungen weit oberhalb der Kohlenstaubbrenner-Ebenen mit bedeutend geringerem Anfahr/Stützölbrenner-Einsatz und 30% Öleinsparung das Wärmeübertragungsverhältnis Verdampfer zu Überhitzer korrigiert und der Einsatz von Anfahr/Stützölbrennern verringert und die An/Abfahrzeit verringert werden.

Bei einer weiteren Betriebsvariante werden alle Brennstoff-Schießeinrichtungen (Fig. 1) einer Öffnungs-Ebene der Wasserlanzenbläser 7 in ebener/waagerechter Richtung so eingeschwenkt, dass diese Ebene gleichmäßig mit Brennstoff beschossen wird. Die durch diese tief in die Brennkammer geschossenen Ölstrahlen entstehende Verwirbelung der nach oben strömenden Kohlenstaubflammen bewirkt deren zusätzliche Verwirbelung und Vergleichmäßigung mit gesteigerten Sauerstoffkontakt mit über die Schießleistung weit hinausgehende Kohleverbrennungsleistung und verringertem Anteil von Unverbranntem.

Für den Brennstoff-Schießbetrieb (Fig.2) werden am bestehenden Dampferzeuger die an den Öffnungen 6 angeordneten Wasserlanzenbläser 7 auf Brennstoff-Schießlanzen 22 mit separaten Ölbehältern oder zentraler Ölzufuhr mit Ölvorwärmung und Mengensteuerung (nicht dargestellt) umgerüstet. Zuteil/Absperr/Drossel- und/oder Vorwärmeinrichtungen für den einzuschießenden Brennstoff sind wahlweise vorhanden. Die Wasserlanzenbläser 7 sind mit gesteuerten Bewegungssystemen über waagerechte Führungsschienen 9 in X-Richtung, senkrechte Führungsschienen 10 und Führungsarme 11 in Y-Richtung und Schwenkgabeln 12 ausgerüstet, können somit über diese X-Y-Wege mit dem Kardangelenk 14 als Festlager innerhalb eines Mindestschwenkbereiches von 60 Grad die Brennstoff-Schießlanzen 22 stabil ausrichten.

Während der herkömmliche Wasserlanzenbläser 7 bei Wasserblasbetrieb in den X-Y-Richtungen ständig in Bewegung sein muss, um Thermoschocks an den vom Wasserstrahl getroffenen heißen Rohrwänden zu vermeiden, wird beim Brennstoff-Schießbetrieb eine zur Stabilisierung der Kohlenstaubflamme vorgegebene Strahlrichtung stabil und meist starr eingestellt.

Mit der bevorstehenden Lasteinsenkung auf 40 % m beschriebenen Beispiel werden ein bis zwei Brennstoff-Schießlanzen 22 in ausgewählten Öffnungen 6 mit hinreichender Entfernung und Richtung zum zu erwartenden instabilen Flammenzentrum G-8 in Stellung gebracht und bei beginnender Instabilität der Flamme, was aus Messdaten ermittelt wird, in Betrieb genommen.

Dabei wird die Brennstoff-Schießlanze 22 in der Lanzen-Führung 21 der Düsenhalterung 17 um den Betrag Z=60 mm nach vorn in Richtung Brennkammer 1 verschoben und vorzugsweise auf 80 °C vorgewärmtes Heizöl in die Brennkammer geblasen.

Mit der hier nicht näher erläuterten und dargestellten Öl-Zulaufsteuerung bei vorgegebenem Öldruck von 7 bis 25 bar mit/ohne Vorwärmung sind je nach Qualität des Heizöles bei einem inneren Lanzendurchmesser der Brennstoff-Schießlanze von 2 mm Einblasegeschwindigkeiten zwischen 20 und 60 m/s je nach Entfernung der Brennstoff-Schießlanze 22 vom zu beschießenden kritischen Flammenbereich, hier G-8, Wärmeleistungen von ca. 2 bis 7 MW erreichbar.

Das entspricht für diesen Dampferzeugertyp einem Wärmeleistungsanteil bis zu 0,5% pro Brennstoff-Schießeinrichtung. Durch vergrößerte Lanzendurchmesser kann diese Wärmeleistung erheblich gesteigert werden.

Selbstverständlich ist nur der vordere für die Lanzenführung 21 erforderliche Lanzenteil mit dem geringen Durchmesser von hier 3 mm Außendurchmesser ausgeführt, während sich im hinteren Teil der Durchmesser erweitert.

Durch das Einblasen eines kompakten Ölstrahles mit 20 bis 60 m/s wird bei Kohlenstaubflammenströmungen um die 10 bis 20 m/s der Ölstrahl erst 5 bis 10 m von der Öffnung 6; 6.1; 6.2; 6.3; 6.4 entfernt aufreißen und durch die vorhandene Kohle-Wirbelströmung zerstäubt werden. Damit wird der Schießcharakter des Strahles, mit Zerstäubung und später Zündung durch das Auftreffen auf die Kohlenstaubteilchen zur örtlichen Stabilisierung der Kohlenstaubflamme beitragen.

Bei einer weiteren Ausführung wird durch die Injektorwirkung des Ölbrennerstrahles im Vorsatzrohr 19 über die Kühlluftöffnungen 25; 26 kalte Umgebungsluft angesaugt, welche als Luftschleier wegen fehlender Zündtemperatur erst verzögert eine Zündung des Öl-Luftgemisches in ausreichendem Abstand von den Rohrwänden 5 bewirkt.

Bei einer weiteren Lösung wird an den Kühlluftöffnungen 25 ein Heißdampfanschluss 25.1 installiert. Der Ringspalt zwischen Außendurchmesser der Blasdüse 18 und dem Vorsatzrohr 19 wird derart schmal gestaltet, dass über den dort austretenden Heißdampf-Ringstrom eine Ejektorwirkung eintritt und der Ölstrahl gegenüber dem Vorsatzrohr 19 geschützt angesaugt und Heißdampf als Schutzmantel und Führung in Rohrwandnähe beim Brennkammer-Eintritt den Ölstrahl inertisiert, dieser sich anfangs nicht entzündet und erst in ausreichender Entfernung von der Rohrwand 5 zerstäubt und verbrannt wird.

Bei weiteren Lösungen wird zur Korrektur des Ölaustrittstrahles die Lanzenausgang 31 der Brennstoff-Schießlanze 22 als Düse oder Blasmundstück oder Schlitz gestaltet oder angefast/angeschrägt. Die Brennstoff-Schießlanze 22 wird um den Betrag Z bis zum Ausgang des Vorsatzrohres 19 nach vorn geschoben, um den Ölstrahl zu formen oder dessen Reichweite zu beeinflussen oder statt Umgebungsluft an den Kühlluftöffnungen vorgewärmte Luft oder inertisierendes Rauchgas einzublasen. Über Mischung, Temperatur und Druck gasförmiger Medien aus Luft, Dampf und/oder Rauchgas beim Austritt aus dem Vorsatzrohr 19 wird durch Ummantelung des Ölstrahles die Entfernung des Zündpunktes von der Öffnung eingestellt. Die Einblasegeschwindigkeit und/oder Menge des zündstabilisierenden Brennstoffes wird durch unterschiedliche Öffnungsgrade der Absperr/Drosseleinrichtung oder Drehzahl der Zuteileinrichtung gesteuert, die Leistung und/oder Reichweite der Brennstoffstrahlen durch Mengensteuerung des zündstabilisierenden Brennstoffes geregelt.

Bei einer weiteren Ausführung wird vor Beginn und/oder am Ende des Schießbetriebes kurzzeitig Wasser und/oder Dampf und/oder Luft zur Inertisierung und/oder Reinigung der Brennstoff-Schießeinrichtung und/oder der Reinigungsvorrichtung und oder der Überwachungsvorrichtung oder in Kombination dieser Vorrichtungen eingeblasen.

Bei einer weiteren Lösung wird die Wasserlanze 13 und die Brennstoff-Schießlanze 22 gleichzeitig derart betrieben, dass die Brennstoff-Schießlanze einen kompakten Ölstrahl schießt und die Wasserlanze 13 durch ihre Düse 18 mit Heiß- und/oder Druckluft statt Wasser beaufschlagt wird. Damit wird ein kompaktes Öl-Luftgemisch in die Brennkammer mit intensiver örtlicher Wärmewirkung und Verbrennung derart eingeschossen, dass der Verbrennungsort in Abhängigkeit von der Einblasegeschwindigkeit der Luft oder/und des Öls in gesteuerter Entfernung von der Einblaseöffnung mit großer örtlicher Wärmeintensität in der Brennkammer 1 platziert werden kann.

Bei einer weiteren Lösung wird bei geringer Sauerstoffkonzentration am zu stabilisierenden Bereich K2 ((Fig. 1) nur der Brennstoffstrahl BS1 geschossen, während der Strahl BS2 als Druckluftstrahl aus der Öffnung 6.2 gebildet wird. Dafür wird die dort installierte Wasserlanze 13 über die sonst mit Wasser betriebene Blasdüse 18 erfindungsgemäß mit Druck- und/oder Heißluft betrieben, die Brennstoff-Schießlanze 22 außer Betrieb bleiben.

Bei einer weiteren Lösung wird der Brennstoff-Schießbetrieb mit Brenngas/Erdgas oder/und Luft realisiert. Die Wasserlanze 13 ist ohne Brennstoff-Schießlanze 22 und deren Führung 21 (Fig.3) ausgeführt. Über einen Wechselschieber oder andere Umschalteinheit wird wahlweise Wasser oder Brenngas/Erdgas oder Luft in das Blasrohr 16 des Wasserlanzenbläsers 7 gedrückt und ein Gasstrahl erzeugt. Ein Verteiler mit Steuereinrichtung und Umschalteinheit für den wahlweisen Betrieb mit Wasser oder Brennstoff ist angeordnet.

Wahlweise wird bei einer Lösung der Kühlluftanschluss 25 wechselweise mit Heißdampf oder Umgebungsluft zusätzlich betrieben. und die Luft/Heißdampf-Zufuhr am Kühlluftanschluss 25 geschaltet. Während die Blasdüse 18 den Gasstrahl steuert, erfolgt mit dem Umgebungsschleier aus Luft oder Heißdampf ein gewisser Schutz eventuell zündender Gasstrahlen gegenüber der Rohrwand und des Vorsatzrohres. Selbstverständlich wird letztere Ausführung auch mit Heizöl betrieben, wenn entsprechend kleine Blasdüsendurchmesser 18 oder diskontinuierlicher Brennstoff-Schießbetrieb den Ölverbrauch und die Heizleistung im Dampferzeuger in wirtschaftlichen Grenzen halten. In diesem Fall wird wechselweise mit Wasser gereinigt oder mit Öl oder Gas geschossen und so die Zündstabilisierungswirkung erreicht. Nach dem Brennstoff-Schießbetrieb erfolgt wahlweise ein Wasser- oder Dampfstoß zur Reinigung der Blasdüse 18.

Alle Lösungen werden bei zum Pulsieren neigenden Feueranlagen und/oder bei Teil last, An- und Abfahren angewandt. Intervallartig schießen Brennstoff-Schießlanzen 22 Brennstoffstrahlen in zündkritische oder flammenarme Bereiche des Brennkammerquerschnittes. Durch die X-Y-Koordinatenbewegung der Brennstoff-Schießlanzen 22 können auch Brennstoffstrahlen in beliebigen Brennkammerhöhen und -breiten mit festen Koordinaten oder in X-Y-Richtung bewegten Koordinaten angesteuert werden, die Reichweite der Ölflammen bei vorgegebenem Öldruck durch die Öl-Zulaufsteuerung über Menge und Geschwindigkeit des eingeblasenen Ölstrahles kurz gehalten, aber auch in die Tiefe der Brennkammer gerichtet werden.

Für diese Steuerung ist ein System zur visuellen oder strahlungstechnischen Ortung des Brennstrahles in der Brennkammer von Bedeutung. Dafür ist das System Feuerraumsonde 28 mit Videokamera geeignet, kann aber auch mit Wasserlanzenbläsern 7 gekoppelt verwendet werden. Über diese Überwachungs-Systeme wird gezielt der Brennstoffstrahl über die X-Y-Steuerung zu den zu stabilisierenden Brennkammerorten gesteuert und/oder der durch starke Kohleflammenströmung beeinflusste Brennstoffstrahl korrigiert.

Bei einer weiteren Betriebsweise der Brennstoff-Schießeinrichtung wird der Brennstoffstrahl in der Brennkammer bestimmte Bereiche nur zeitweise/pulsierend mit Ölflammen eingeschossen, wodurch der Ölverbrauch des minimiert wird.

Durch die Zwillingsanordnung von Wasserlanze 13 und Brennstoff-Schießlanze 22 (Fig.4) ist wahlweise der Austausch beider Lanzen möglich. Die Leistungsanpassung der Brennstoff-Schießeinrichtungen an die Dampferzeugerbedingungen und deren Kohlequalität wird durch geringen Montagebedarf vollzogen. Gleichzeitig sind Medienanschlüsse einfach zu gestalten.

Die Brennstoff-Schießlanze 22 ist im oberen Teil (Fig. 5) mittels Lanzen-Führungen 21 und Kardanring-Führung 39, welcher sich seitlich neben der Aufnahmeöffnung der Wasserlanze 13 im Kardangelenk 14 befindet, gleitend gelagert. In der Regel ist die Brennstoff-Schießlanze 22 um den Betrag Z bis in die Kardangelenk-Abdeckung 24 zurückgezogen, so dass die Kardanring-Führung 39 mittels Spühl- bzw. Kühlluft schützt. Bei Inbetriebnahme der Brennstoff-Schießlanze 22 wird diese um den Betrag Z nach vorn in die Kardanring-Führung 39 geschoben.

Im unteren Teil (Fig. 5) wird durch das Mantelrohr 30 wahlweise ein Treibmedium, wie Heißdampf oder Luft geblasen und /oder über einen Mantelluftspalt 32 Umgebungsluft angesaugt, um die Brennstoff-Schießwirkung zu steuern. Beim Zurückziehen der Brennstoff-Schießlanze 22 mit Mantelrohr 30 wird die Öffnung durch einen Schieber 37 (um 90° gedreht gezeichnet) verschlossen.

Drei Vorrichtungen, z.B. für Reinigung, Überwachung und Brennstoffschießen sind in dem Trommelgehäuse 33 miteinander gekoppelt (Fig. 6), so dass eine wesentliche Einsparung an Gerätetechnik und Öffnungen 6 in der Rohrwand 5 eintritt, indem eine gemeinsame Bewegungssteuerung erfolgt. Es wird der Mediumtransport von Öl beim Brennstoff-Schießverfahren, von Wasser beim Reinigungsverfahren und Strahlungstransport beim Überwachungsverfahren wechselweise in einer gemeinsamen Bewegungseinrichtungen vorgenommen. Dabei wird wahlweise zeitgleich mit den Brennstoffstrahlen deren Zündstabilität und/oder die Brennkammer-Temperaturen und/oder das Ausbrandverhalten der Flammen mit Überwachungseinrichtungen kontrolliert, instabile Bereiche lokalisiert und/oder prognostiziert, deren ausgewerteten Signal für die Bewegungs- und/ oder Richtungssteuerung der Brennstoffstrahlen verwendet, wobei diese Aufgaben zeitgleich von unterschiedlichen Öffnungen 6 in der Brennkammer 1 ausgeführt werden. Bekannterweise werden von der Führungsstange 27 die verstellbaren X-Y-Koordinaten der hier nicht dargestellten Bewegungsmechanik (Fig.2) übernommen und an das Trommelgehäuse 33 übertragen. Bei im Trommelgehäuse 33 zurückgezogener Feuerraumsonde 28 mit Videokamera und nicht dargestellter Wasserlanze 13 wird die Brennstoff-Schießlanze 22 in den Führungsscheiben 34;35 wahlweise nach vorn bis in das Kardan-Mundstück 36 eingeschoben und arretiert.

Die Brennstoff-Schießlanze 22 ist wahlweise für das Schießen unterschiedlicher zünstabilisierender Brennstoffe mit und/oder ohne Treibmedium ausrüstbar: Heizöl wahlweise mit oder ohne Treib/Heißdampf mit oder ohne Heiß/Kaltluft mit und oder Rauchgas, Brenngas wahlweise mit oder ohne Treib/Heißdampf mit oder ohne Heiß/Kaltluft mit oder ohne Rauchgas, brennbare Festkörpern oder Kohlenstaub wahlweise mit oder ohne Treibdampf mit oder ohne Heiß/Kaltluft, Gemische von Heizöl und/oder Brenngas und/oder Kohlenstaub, diskontinuierliches Dampf- oder Wasserblasen zur Reinigung der Brennstoff-Schießlanze 22, des Kardangelenkes oder des Luken- und benachbarten Rohrbereiches und/oder zur Abwehr von Rückzündung oder Verschmutzung.

Bei einer Lösung werden mit Brenngas gefüllte Bälle 37, in der Art von Tischtennis bällen, mit Zellrad der Brennstoff-Schießlanze 22 gesteuert zugeteilt und mittels Luft oder Dampf oder Rauchgas in die Brennkammer 1 geschossen und gesteuert an Flammen stabilisierende Orte transportiert, wobei die Bälle dort durch Hitzeeinwirkung und Gasausdehnung platzen und eine explosionsartige kleine Flamme entsteht und so die Kohlenstaubflamme stabilisiert. Bei dieser Lösung kann auch Luft als Blasmedium Verwendung finden, da der Zündprozess mit der Verbrennungsluftbindung erst mit dem Platzen der Gasbälle eintritt.

Weitere Brennelemente sind einsetzbar, wie ölgetränkte hochbrennbare Feststoff-Pellets oder Brenngasgemische, Feinstkohlenstaubgemische mit rauchgas-, luft- und/oder dampfhaltigem Transportmedium.

So wird bei einer Lösung einem Inertgas hochkalorische Feinst- oder Wirbelschichtkohle zugeteilt und über die Brennstoff-Schießlanze 22 in die Brennkammer geschossen.

Bei einer weiteren Lösung wird zur Unterstützung der Verbrennung statt Luft Sauerstoff angereichertes Gas oder reiner Sauerstoff eingeschossen.

Die Vielzahl der bei Teillast nicht für die Wasserlanzen-Tätigkeit benötigten Öffnungen 6 erlaubt den Betrieb mehrerer Brennstoff-Schießeinrichtung 22 zeitgleich. Somit ist ausreichende Variabilität der Kombination und Richtungsanordnung von Brennstoffstrahlen und/oder Luft- oder Rauchgas- oder Sauerstoffstrahlen gegeben. Sie können gegeneinander, in sauerstoffarme oder -reiche oder brennstoffarme Zonen, sogenannte "Toträume", oder in den Bereich der Ausbrandluft-Bläser gerichtet werden, um die Wärmeverteilung vor dem Brennkammeraustritt gleichmäßiger zu gestalten.

Der Bewegungsmechanismus in X-Y-Richtung der Brennstoff-Schießeinrichtungen ist nicht an die beschriebene Technik gebunden, weitere bekannte Bewegungstechniken sind verwendbar. Diese werden bei einer vereinfachten Technik als separate Bewegungssteuerung für Brennstoff-Schießtechniken ohne Kopplung mit den beschriebenen Zusatzgeräten verwendet.

Bei einer Lösung werden in der Brennkammer 1 vorhandene Heißluftöffnungen, hier für Ausbrandluft-Bläser 40.1; 40.2; 40.3; 40.4 zum Einspritzen von hochwertigem Brennstoff, hier Heizöl, mit Brennstoff-Schießlanzen 22 aus/nachgerüstet (Fig.7). In der Rohrwand 5 sind in den Ausbrandluft-Bläsern 40.1 mit einem Durchmesser von 0,60 m mittig 3 bis 4 mm dicke Brennstoff-Schießlanzen 22 eingebaut (Fig.7.1). Diese werden bei Betrieb um den regelbaren Betrag Z nach vorn geschoben. Der Ölstrahl mit einer Schießgeschwindigkeit von ca. 30 m/s wird durch die Heißluft mit Einblasegeschwindigkeit von 35 m/s und vorzugsweise 150 bis 250 °C ummantelt und zündet erst bei der Zerstäubung in ausreichendem Abstand von der Rohrwand 5. Die Rauchgasgeschwindigkeit der aufsteigenden Flamme beträgt um die 5 bis 8 m/s. Die Vermischung von teilweise nicht ausgebranntem Flammen-Rauchgasgemisch mit dem eingeschossenen gezündeten Heißluft-Öl-Gemisch führt zur Restverbrennung vor allem aber zur Verlagerung größerer Wärmeanteile in den Überhitzerbereich zur Korrektur der sonst bei niedriger Teillast absinkenden Überhitzertemperaturen. Durch die Korrektur des Schwenkwinkels "a" der Brennstoff-Schießlanze (Fig.7.1) kann das Zündverhalten der Ölstrahlen und der Restausbrand der Kohlenstaubflamme gesteuert werden.

Diese Korrektur ist durch weitere Lösungen ersetzbar und/oder variierbar. So ist die Brennstoff-Schießlanze 22 am Ausbrandluft-Bläser 40.2 am Boden angeordnet, beim Ausbrandluft-Bläser 40.3 außerhalb angeordnet, beim Ausbrandluft-Bläser 40.4 außerhalb in Schlitzform oder als mehrere, vorzugsweise drei waagerecht nebeneinander angeordneten Brennstoff-Schießlanzen 22 gestaltet.

Durch den Betrieb aller Ausbrandluft-Bläser 40.1; 40.2; 40.3; 40.4 mit Brennstoff-Schießlanzen einer Ausbrandluft-Ebene wird eine Art Öl-Flammenteppich über den gesamten Strömungsquerschnitt der Kohleflammen erzeugt, bei anteiligem Betrieb mehrer Ausbrandluft-Bläser 40.1; 40.2; 40.3; 40.4 mit Brennstoff-Schießlanzen 22 gezielt nur ein Flammenteppich in bestimmten Brennkammerquerschnitten erzeugt um Schräglasten im Überhitzerbereich auszugleichen.

Nachfolgende Lösung (Fig.8.1 und 8.2) wird vorzugsweise in einer Brennkammerebene kurz oberhalb der Kohlenstaubbrenner 2 oder direkt im Brennerbereich angewendet, so dass die technische Mindestlast erheblich absenkbar ist.

Wandöffnungen 51; 52 sind wahlweise in Stegen 43 im Rohr-Steg-Rohr-Wandbereich einer oder mehrerer Ebenen angeordnet (Fig. 8.1).

Brennstoff-Schießeinrichtungen 22 (nicht dargestellt) werden in das Mantelrohr 30 eingeführt und wahlweise bei Außerbetriebnahme zurückgezogen. Sie sind mit ihrer Mechanik am Mantelrohr 30 befestigt oder anderweitig derart arretiert, dass die Dehnungsbewegungen der Membran-Rohrwand 5 übertragen werden können.

Bei einer weiteren Lösung wird das Mantelrohr 30 direkt an eine flexible Druckleitung angeschlossen. Diese saugt über einen Verdichter relativ kaltes Rauchgas aus dem Mühlen- oder Abgasbereich der Dampferzeugers oder Kalt- oder vorgewärmte Luft als Transportmedium zum Einschießen in die Brennkammer an. Mit einem Zuteiler, z.B. Zellrad, wird trockene Feinstbraunkohle oder Wirbelschichtkohle dem Transportmedium zugeteilt. Somit wird aufbereitete hochwertige Trockenkohle, welche in zentralen Aufbereitungsanlagen (z.B. in Schwarze Pumpe) oder aus dem eigenen Kohlenstaubmühlenbetrieb gewonnen wird gezielt zur Flammenstabilisierung genutzt. Die Aufbereitungsanlagen transportieren über Kesselwagen den Brennstoff zum Verbraucher, wo dieser über Entladestation pneumatisch Vorratssilos gefördert und von dort über mechanische und pneumatische Eintragsysteme dem Zuteiler zugeführt wird. Bei einer Lösung erfolgt der Transport aus dem Silowagen, welcher bis an den Dampferzeuger gefahren wird, direkt zum Zuteiler.

Die Ölversorgung (nicht dargestellt) ist am Mauerwerk mit Gerüst 42 oder einer Bühne fest installiert. Die Brennstoff-Schießlanze 22 (Fig.8.2) wird über die Lanzenführung 21 mit Gelenk 12 einen Schwenkbereich zum Ausgleich der Dehnungsbewegung der Membranrohrwand 5 vollständig oder teilweise ausgleichen. Bei Betrieb der Brennstoff-Schießlanze 22 wird diese um einen Betrag Z an oder durch das Mundstück 36 der Wandöffnung 52 geschoben.

Wahlweise verschließt ein Verschlussstopfen 37 beim Zurückziehen der Brennstoff-Schießlanze 22 das Mundstück 36 und/oder die Schwenkstellung der Brennstoff-Schießlanze wird zur Arretierung beim Einführen durch eine Mechanik oder Sensoren gesteuert.

Durch die mit hoher Geschwindigkeit eingeblasenen sehr dünnen Ölstrahlen in die dichte Kohleflamme wird eine Zerstäubung mit Flammenstabilisierung erreicht. Durch die Erfindung werden nachfolgende Vorteile erreicht:
- die Lastschwankungen im Stromnetz werden durch Grundlastkraftwerke mit geringeren Zahl und Zeit von An- und Abfahrvorgängen abgefangen;
- der Einsatz von Spitzenlastkraftwerken wird vermieden;
- die jährliche Dauerbetriebszeit der Dampferzeuger wird erhöht;
- Der Heizöleinsatz wird bei An- und Abfahrvorgängen um 50 % verringert;
- die technische Mindestlast kohlegefeuerter Großdampferzeuger wird von 50-70 % auf mindestens 30 bis 40 % verringert;
- der Teillastbetrieb der Dampferzeuger kann mit geringem/ohne Einsatz von Stützölbrennern erheblich minimiert werden und dabei 70% Heizöl eingespart werden;
- die An - und Abfahrzeiten von Wärmeanlagen/Dampferzeugern werden verringert;
- die Wärmeübertragungsverhältnisse zwischen Strahlungswärme der Brennkammer und Berührungswärme in den Nachschaltheizflächen werden an die Teillast angepasst;
- das Kessel-Lastverhalten wird variabler;
- es werden zusätzliche Rohrausbiegungen und Öffnungen in der Kesselwand eingespart;
- durch die Zusatzfunktion Brennstoffschießen wird die Effektivität von Wasserlanzenbläsern und Ausbrandluft-Bläsern erheblich gesteigert;
- die Realisierung des Brennstoff-Schießverfahrens kann an vorhandenen Wasserlanzenbläsern nachgerüstet werden;
- die Nachrüstung von Feinstkohlenstaub-Zündbrenneranlagen mit Abscheide- und Bunkersystemen wird vermieden.

### Bezugszeichenliste

- 1: Brennkammer
- 2: Kohlenstaubbrenner
- 3: Anfahr/Stützölbrenner
- 4: Rauchgasrücksaugeöffnung
- 5: Rohrwand
- 5.1: Membran-Rohrwand
- 5.2: Wandöffnung
- 6; 6.1; 6.2; 6.3; 6.4: Öffnungen für Wasserlanzenbläser
- 7: Wasserlanzenbläser
- 8: Rahmen
- 9: waagerechte Führungsschiene
- 10: senkrechte Führungsschiene
- 11: Führungsarm
- 12: Gelenk
- 12.1: Schwenkgabel
- 13: Wasserlanze
- 14: Kardan- oder Kugelgelenk
- 15: Abdeckhaube
- 16: Blasrohr
- 17: Düsenhalterung
- 18: Blasdüse
- 19: Vorsatzrohr
- 20: Führungskreuz
- 21: Lanzen-Führung
- 22: Brennstoff-Schießlanze
- 23: Kardangelenk-Abdeckung (Unterdruck)
- 24: Kardangelenk-Abdeckung (Überdruck)
- 25: Kühlluftöffnungen (Unterdruck)
- 25.1: Heißdampfanschluss
- 26: Kühlluftöffnungen (Überdruck)
- 27: Führungsstange
- 28: Feuerraumsonde mit Videokamera oder Sensorik
- 29: fiktives Rasternetz 1-10/ A - J
- 30: Mantelrohr
- 31: Lanzenausgang
- 31.1: Lanzenmündung
- 32: Mantelluftspalt
- 32.1: Ringspalt
- 33: Trommelgehäuse
- 34: hintere Führungsscheibe
- 34.1: Führung
- 35: vordere Führungsscheibe
- 36: Kardan-Mundstück
- 36.1: Mundstück
- 37: Schieber
- 37.1: Verschlussstopfen
- 38: mit Brenngas gefüllte Bälle
- 39: Kardanring- oder Kugelgelenk-Führung
- 40; 40.1; 40.2; 40.3; 40.4: Ausbrandluft-Bläser
- 41: Heißluftstrahl
- 42: Mauerwerk mit Gerüst
- 43: Steg der Membranwand
- 44: Mauerwerk-Öffnung
- 45: Stabilisator
- 46: Mauerwerks-Aussparung
- 47: Mechanik
- 48: Mündungsführung
- 49: Brennkammertrichter
- 50: Lanze für Optik
- 51: Wandöffnung
- 52: Wandöffnung
- K1;K2: Flammenkern (Fläche in fiktiver Ebene)
- K3;K4: Flammenkonzentration durch zerstäubtes Öl (Ölstrahl-Flächendurchtritt in fiktiver Ebene)
- BS1;BS2;BS3;BS4: Brennstoffstrahlen (weit reichende Strahlen)
- V: Verschluss-Bewegung
- X: waagerechte Koordinatenbewegung
- Y: senkrechte Koordinatenbewegung
- Z: Öllanzenweg in /mm/
- a: Schwenkwinkel

## Patentansprüche

1. Verfahren zum Betrieb einer Wärmeanlage, insbesondere eines Dampferzeugers, für eine An- und Abfahr- sowie Teillastfahrweise, wobei die Wärmeanlage mit in einer Brennkammer angeordneten Kohlenstaub- und Zündbrennern betrieben wird, **gekennzeichnet dadurch, dass**
zur Stabilisierung der Fahrweisen weit reichende Strahlen eines zündfähigen Brennstoffes, insbesondere Öl; Gas und/oder Trockenfeinkohle, steuerbar in einen wählbaren Bereich der Brennkammer mit hoher Geschwindigkeit in der Anfangsphase ungezündet eingeschossen, an instabilen Flammenbereichen und/oder Temperatursenken und/oder Nachverbrennungszonen platziert sowie dort zerstäubt und verbrannt werden.

2. Verfahren nach Anspruch 1, **gekennzeichnet dadurch, dass**
der Brennstoff mit mindestens doppelter Schieß-Geschwindigkeit gegenüber der mittleren Einblase-Geschwindigkeit des Kohlenstaubbrenner-Gemisches und/oder der Brennstoff stetig oder pulsierend eingeschossen wird.

3. Verfahren nach Anspruch 1 bis 2, **dadurch gekennzeichnet, dass**
der Brennstoff mittels eines Treibmediums, insbesondere Dampf oder Heiß- oder Druckluft, eingeschossen wird und/oder der Brennstoff mit dem Treibmedium vor einer vorzeitigen Zündung geschützt in die Umgebung des wählbaren Bereiches eingeschossen wird.

4. Verfahren nach Anspruch 1 bis 3, **dadurch gekennzeichnet, dass**
der Brennstoff in einem großen Winkelbereich, vorzugsweise bis 60 Grad, variierbar eingeschossen wird und/oder der Brennstoff mit variablen Schwenk- und/oder Drehbewegungen in X- und/oder Y-Richtung eingeschossen wird und/oder die Richtungssteuerung des einzuschießenden Brennstoffes in Verbindung mit einer Heizflächenreinigung durchgeführt wird und/oder in den wählbare Bereich der Brennkammer mit getrennten und/oder unterschiedlich weit reichenden Strahlen Brennstoffes und/oder Verbrennungsluft und/oder Sauerstoff und/oder ein Gemisch eingeschossen wird.

5. Verfahren nach Anspruch 1 bis 4, **dadurch gekennzeichnet, dass**
die Geschwindigkeit, die Reichweite, die Leistung und/oder die Menge des einzuschießenden Brennstoffes gesteuert wird und/oder der Brennstoff in Abhängigkeit von Signalen der Feuerraum- und/oder Flammenüberwachung gesteuert eingeschossen wird und/oder die Wirkung des eingeschossenen Brennstoffes mit Hilfe von Überwachungsverfahren kontrolliert, Signale erzeugt und für die Bewegungs- und/oder Richtungssteuerung des einzuschießenden Brennstoffes verwendet wird.

6. Vorrichtung zum Betrieb einer Wärmeanlage, insbesondere eines Dampferzeugers, für eine An- und Abfahr- sowie Teillast-Fahrweise, wobei die Wärmeanlage eine mit Kohlenstaub- und Zündbrennern versehene Brennkammer aufweist, **dadurch gekennzeichnet, dass**
in einer Öffnung der Wand der Brennkammer eine oder mehrere mit einem zündfähigern Brennstoff beaufschlagbare steuerbare und bewegliche Brennstoff-Schießeinrichtungen angeordnet sind.

7. Vorrichtung nach Anspruch 6, **dadurch gekennzeichnet, dass**
die Öffnung für die Brennstoff-Schießeinrichtung im Steg eines Rohr-Steg-Rohr-Segmentes einer Membran-Rohrwand oder im Zwischenraum zweier Rohre der Brennkammerwand angeordnet ist und/oder die Öffnung für die Brennstoff-Schießeinrichtung in der Rohrwand mit einem Mantelrohr oder einem Mundstück verschweißbar gebildet ist.

8. Vorrichtung nach Anspruch 6 bis 7, **dadurch gekennzeichnet, dass**
die Brennstoff-Schießeinrichtung eine in der Öffnung der Brennkammer verschiebbare und/oder zurückziehbare Brennstoff-Schießlanze aufweist und/oder eine Druck- oder Heißluft und/oder Sauerstoff und/oder Gasgemisch beaufschlagte Schieß-Lanze aufweist und/oder die Brennstoff-Schießlanze eine Beschleunigungseinrichtung und/oder ein angepasstes Mündungsteil, ein Mundstück, eine Düse oder einen Schlitzaustritt aufweist und/oder ein Mantelrohr mit im Inneren angeordneter Brennstoff-Schießlanze aufweist.

9. Vorrichtung nach Anspruch 6 bis 8, **dadurch gekennzeichnet, dass**
die Brennstoff-Schießeinrichtung mit einem Reinigungsgerät und/oder einem Überwachungsgerät und/oder einem Ausbrandluft-Bläser über eine gemeinsame Bewegungs- und Steuereinrichtung gekoppelt ist und/oder die Brennstoff-Schießlanze im Zentrum eines Wasserlanzenbläsers angeordnet ist und/oder der Eingang des Reinigungsgerät einen Wechselschieber oder eine Umschalteinheit für die Zufuhr von Wasser oder Brennstoff aufweist.

10. Vorrichtung nach Anspruch 6 bis 9 , **dadurch gekennzeichnet, dass**
die in einem Reinigungsgerät, insbesondere Wasserlanzenbläser, angeordnete Brennstoff-Schießlanze einen Ringspalt- oder Ejektoraustritt aufweist, der mit einer Druck- und/oder Heißluft- und/oder Rauchgas- und/oder Heißdampf Leitung verbunden ist und/oder am Eingang des Reinigungsgerätes ein Verteiler mit Steuereinrichtung und Umschalteinheit für den wahlweisen Betrieb mit Wasser, Luft oder Brennstoff angeordnet ist und/oder die Brennstoff-Schießlanze in der Düse des Reinigungsgerätes oder in einer Führungseinrichtung, vorzugsweise einem Kardan- oder Kugelgelenk, angeordnet ist.
